(19) Europäisches Patentamt
European Patent Office
Office européen des brevets

(11) **EP 4 525 132 B1**

(12) **EUROPEAN PATENT SPECIFICATION**

(45) Date of publication and mention of the grant of the patent:
**09.09.2026 Bulletin 2026/37**

(21) Application number: **23852762.6**

(22) Date of filing: **11.07.2023**

(51) International Patent Classification (IPC):
***H01M 10/42*** *(2006.01)* ***G08B 17/00*** *(2006.01)*
***B60L 3/00*** *(2019.01)* ***B60L 58/24*** *(2019.01)*

(52) Cooperative Patent Classification (CPC):
**H01M 10/425; B60L 3/0046; B60L 58/24; H01M 10/482;** B60L 2240/36; B60L 2240/545; H01M 2010/4271; Y02E 60/10

(86) International application number:
**PCT/KR2023/009877**

(87) International publication number:
**WO 2024/034879 (15.02.2024 Gazette 2024/07)**

(54) **BATTERY FIRE PREDICTION METHOD AND BATTERY SYSTEM PROVIDING SAME**

BATTERIEBRANDVORHERSAGEVERFAHREN UND BATTERIESYSTEM DAMIT

PROCÉDÉ DE PRÉDICTION D’INCENDIE DE BATTERIE ET SYSTÈME DE BATTERIE LE FOURNISSANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **08.08.2022 KR 20220098831**

(43) Date of publication of application:
**19.03.2025 Bulletin 2025/12**

(73) Proprietor: **LG Energy Solution, Ltd.**
**Seoul 07335 (KR)**

(72) Inventors:
- **CHOI, Jang Hyeok**
  **Daejeon 34122 (KR)**
- **KIM, Tae Youn**
  **Daejeon 34122 (KR)**
- **LEE, Seunghyun**
  **Daejeon 34122 (KR)**
- **KIM, Kyeongmin**
  **Daejeon 34122 (KR)**

(74) Representative: **Plasseraud IP**
**104 Rue de Richelieu**
**CS92104**
**75080 Paris Cedex 02 (FR)**

(56) References cited:
**KR-A- 20120 036 622**
**KR-A- 20150 054 199**
**KR-A- 20180 018 040**
**KR-A- 20190 005 407**
**KR-A- 20220 073 266**
**US-A1- 2019 006 724**
**US-A1- 2019 252 735**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### [Technical Field]

The present invention relates to a battery fire prediction method and a battery system providing the method.

### [Background Art]

Unlike an internal combustion engine vehicle, when an electric vehicle catches fire, it is very difficult to put out the fire until the electric vehicle burns down. In addition, unlike an internal combustion engine vehicle, electric vehicles have a characteristic of burning up in an instant, and when a rescue time is delayed, causalities may increase. The reason why this situation occurs is 'thermal runaway' phenomenon in which a temperature of a battery soars above 1,000°C.

Research and development are being conducted to detect the battery thermal runaway in advance. A method of predicting a thermal runaway phenomenon of a battery in advance by collecting battery data such as a temperature and voltage of a battery and analyzing changes in the collected battery data is widely used.

However, in a charge state in which the battery is charged with external power, a battery management system (BMS) is in a sleep mode or a shut down mode. Therefore, the BMS cannot collect the battery data and predict the thermal runaway of the battery in advance. That is, since the thermal runaway phenomenon of the battery is not detected in advance, the battery-related fires mainly occur while the battery is being charged.

Further background art is described in US-20190006724-A1.

### [Summary]

### [Technical Problem]

The present disclosure attempts to provide a battery fire prediction method and a battery system providing the method even when the battery is charged with power of an external charger and a battery management system (BMS) is in a sleep mode because a higher system (e.g., automobile, energy storage system, etc.) in which a battery is installed is not running.

[Technical Solution]

According to an embodiment of the present invention, a battery system includes a battery module including a plurality of battery cells; when the battery module is determined to be in a stable state according to a first low power mode that wakes up every first cycle and determines whether a first fire event occurs in the battery module and a predetermined safety criterion, a slave battery management system (BMS) that wakes up every second cycle, which has a predetermined period longer than the first cycle, and performs a second low power mode that determines whether the first fire event occurs, and a master BMS that transmits a first control signal instructing entry into the first low power mode to the slave BMS and then enters the sleep mode, in a state where the battery module does not supply power to an external device.

The slave BMS may include battery data including information on the state of the battery module with a predetermined reference value to determine whether the first fire event occurs.

The slave BMS may determine that the battery module is in a stable state when the first fire event does not occur during a period in which a total number of times of wake-up according to the first cycle reaches a predetermined reference number of times.

The master BMS may wake up and determine whether a second fire event occurs according to a predetermined algorithm when the first fire event occurs.

The master BMS may transmit a warning message corresponding to the occurrence of the fire in the battery module to a higher controller when the second fire event occurs.

The master BMS may transmit a second control signal instructing entry into the first low power mode to the slave BMS and then enter the sleep mode, when the second fire event does not occur.

According to another embodiment of the present invention, a battery module fire prediction method includes: a step of entering a sleep mode by a slave battery management system (BMS) managing the battery module; a first low power mode step in which the slave BMS wakes up every first cycle to determine whether a first fire event occurs in the battery module; and a second low power mode step in which the slave BMS wakes up every second cycle, which has a predetermined period longer than the first cycle, to determine whether the first fire event occurs, when the battery module is determined to be in a stable state according to predetermined safety criterion.

The first low power mode step may include a step of determining that the battery module is in a stable state when the first fire event does not occur during a period in which a total number of times of wake-up according to the first cycle

reaches a predetermined reference number of times.

The first low power mode step and the second low power mode step may include comparing, by the slave BMS, battery data including information on the state of the battery module with a predetermined reference value to determine whether the first fire event occurs.

The first low power mode step and the second low power mode step may further include waking up, by a master battery management system (BMS) controlling the slave BMS to determine whether a second fire event occurs according to a predetermined algorithm, when the first fire event occurs.

The first low power mode step and the second low power mode step may further include transmitting, by the master BMS, a warning message corresponding to the occurrence of the fire in the battery module to a higher controller when the second fire event occurs.

The second low power mode step may further include transmitting, by the master BMS, a second control signal instructing entry into the first low power mode to the slave BMS and then entering the sleep mode, when the second fire event does not occur.

## [Advantageous Effects]

According to the present invention, even when a battery management system (BMS) is in a sleep mode, it is possible to predict the occurrence of a fire in a battery and reduce causalities and property damage.

According to the present invention, a wake-up cycle of a slave BMS is adjusted to a short or long term according to a safe state of a battery, thereby saving power consumption of the battery management system (BMS).

## [Brief Description of the Drawings]

FIG. 1 is a block diagram for describing a battery system according to an embodiment.

FIG. 2 is a block diagram illustrating in detail a slave BMS and a master BMS of FIG. 1.

FIG. 3 is a flowchart illustrating a battery fire prediction method according to an embodiment.

FIG. 4 is a flowchart illustrating in detail a first low power mode step (S200) and a second low power mode step (S300) of FIG. 3.

## [Detailed Description]

Hereafter, embodiments of the present invention will be described in detail with reference to the accompanying drawings and the same or similar components are given the same reference numerals and are not repeatedly described. The suffix "module" and/or "unit" for components used in the following description is given or mixed in consideration of only the ease of writing of the specification, and therefore, does not have meanings or roles that distinguish from each other in themselves. Further, when it is decided that a detailed description for the known art related to the present invention may obscure the gist of the present invention, the detailed description will be omitted. Further, it should be understood that the accompanying drawings are provided only in order to allow embodiments of the present invention to be easily understood, and the teaching of the present invention is not limited by the accompanying drawings, but includes all the modifications, equivalents, and substitutions included in the teaching and the scope of the appended claims.

Terms including an ordinal number such as first, second, etc., may be used to describe various components, but the components are not limited to these terms. The terms are used only to distinguish one component from another component.

Further, in the present specification, it is to be understood that when one component is referred to as being "connected to" or "coupled to" another component, it may be connected or coupled directly to another component or be connected to another component with the other component interposed therebetween. On the other hand, it should be understood that when one element is referred to as being "connected directly to" or "coupled directly to" another element, it may be connected to or coupled to another element without the other element interposed therebetween.

It will be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

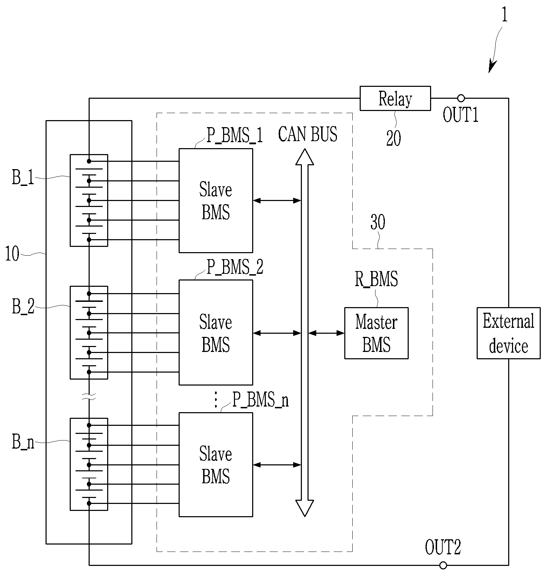

FIG. 1 is a block diagram for describing a battery system according to an embodiment.

Referring to FIG. 1, the battery system 1 includes a battery 10, a relay 20, and a battery management system (BMS) 30.

Referring to FIG. 1, the battery 10 is connected between two output terminals OUT1 and OUT2 of the battery

system 1. The relay 20 is connected between a positive electrode of the battery system 1 and the first output terminal OUT1. The connection relationship between the configurations illustrated in FIG. 1 is an example, but the invention is not limited thereto.

The battery 10 may include at least one battery module B. The battery module B may include a plurality of battery cells electrically connected in series and/or in parallel. FIG. 1 illustrates a plurality of battery modules B_1, B_2, ..., B_n, but is not limited thereto, and the battery 10 may include one battery module B_1. In addition, although FIG. 1 illustrates a plurality of battery cells included in the battery module B being connected in series, the present invention is not limited thereto, and the plurality of battery cells may be connected in series and/or parallel. In some embodiments, the battery cell may be a rechargeable secondary battery.

The battery 10 may be in a discharge state, a charge state, or an idle state. The discharge state may be a state in which the battery 10 supplies power to an external device to be discharged. The charge state may be a state in which the battery 10 is charged by receiving power of an external device. The idle state may be a state in which the battery 10 and the external device are electrically connected but no power is transmitted. In this case, the external device may be a charger in the charge state and a load in the discharge state.

When the battery 10 is discharged, the battery management system (BMS) 30 may operate in an operating mode managing the battery system 1 according to a preset logic. In the charge state and idle state of the battery 10, the battery management system (BMS) 30 may operate in a sleep mode that does not perform preset logic. Conventionally, in the charge state and idle state of the battery 10, the battery management system (BMS) 30 is in the sleep mode in which it does not perform any operation including predicting a fire event of the battery 10. As a result, even if the fire in the battery 10 such as thermal runaway occurs in the charge state and the idle state of the battery 10, it is not possible to prepare in advance.

According to the embodiment, the battery management system (BMS) 30 may operate in a low power mode in the state where the battery 10 is in the charge state and in the idle state. The low power mode is a mode in which the battery management system (BMS) 30 in the sleep mode wakes up every first cycle, which is a short cycle, or second cycle, which is a long cycle, according to the safety state of the battery, and predicts a fire event of the battery 10.

The relay 20 electrically connects or separates the battery system 1 and the external device under the control of the battery management system 30. When the relay 20 is turned on, the battery system 1 and the external device are electrically connected to perform the charge or discharge. When the relay 20 is turned off, the battery system 1 and the external device are electrically separated.

The battery management system (BMS) 30 includes a slave BMS P_BMS and a master BMS R_BMS.

The slave BMS P_BMS may monitor and manage the battery module B. The slave BMS P_BMS may be electrically connected to each of the plurality of battery cells through wires to collect battery data. In this case, the battery data may include at least one of a cell voltage, a cell current, and a cell temperature of each of the plurality of battery cells indicating the state of the battery module B. In addition, the battery data may include at least one of a module voltage, which is a voltage across the battery module B, a module current, which is a current flowing through the battery module B, and a module temperature, which is a temperature of the battery module B. In one embodiment, the battery module B and the slave BMS P_BMS may be composed of one battery pack. The battery management system (BMS) 30 may include a plurality of slave BMSs P_BMS corresponding to each of the plurality of battery modules B.

The master BMS R_BMS may communicate with a controller (hereinafter referred to as a higher controller) of a higher system in which the battery system 1 is mounted, transmit/receive various information, and manage the battery management system (BMS) 30 as a whole.

According to the embodiment, in the charge state and idle state of the battery 10, under the control of the master BMS R_BMS, the slave BMS P_BMS may operate in the first low power mode or the second low power mode, and the master BMS R_BMS may run in the sleep mode.

The first low power mode or the second low power mode are modes in which the slave BMS P_BMS in the sleep mode wakes up every first cycle, which is the short cycle, or second cycle, which is the long cycle, according to the stable state of the battery to determine whether the first fire event occurs. The sleep mode is a mode in which the master BMS R_BMS sleeps without performing preset logic unless the master BMS R_BMS receives an alarm message corresponding to the occurrence of the first fire event from the slave BMS P_BMS.

Referring to FIG. 1, each of a plurality of slave BMSs P_BMS_1, P_BMS_2,..., P_BMS_n in the sleep mode may wake up every first cycle or second cycle to collect battery data, and compare the collected battery data and a first reference value to determine whether the first fire event occurs. When at least one slave BMS P_BMS of the plurality of slave BMSs P_BMS_1, P_BMS_2,..., P_BMS_n transmits an alarm message corresponding to the occurrence of the first fire event to the master BMS R_BMS, the master BMS in the sleep mode R_BMS may wake up.

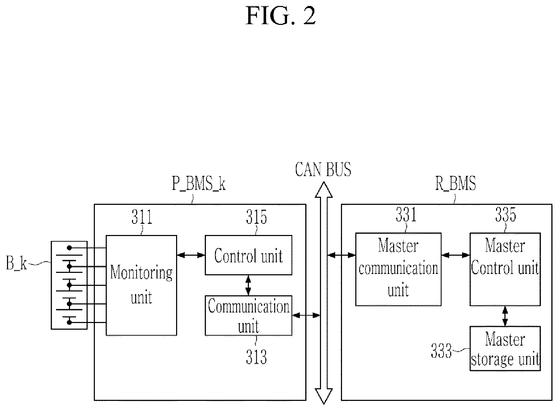

FIG. 2 is a block diagram illustrating in detail a slave BMS and a master BMS of FIG. 1.

Referring to FIG. 2, according to an embodiment, each of the plurality of slave BMSs P_BMS_1, P_BMS_2,..., P_BMS_n may include a monitoring unit 311, a control unit 315, and a communication unit 313. According to another embodiment, in order to reduce the size of the battery management system (BMS) 30, each of the plurality of slave BMSs P_BMS_1, P_BMS_2,..., P_BMS_n does not include the control unit 315, and may include the monitoring unit 311 and the

communication unit 313. In this case, each of the plurality of slave BMSs P_BMS_1, P_BMS_2,..., P_BMS_n may operate under the control of the master BMS R_BMS.

Hereinafter, reference numeral 'P_BMS_k' is used to indicate a specific slave BMS among the plurality of slave BMSs P_BMS_1, P_BMS_2,..., P_BMS_n. In addition, reference numeral 'B_k' is used to indicate a specific battery module among the plurality of battery modules B_1, B_2,..., B_n.

The monitoring unit 311 may be electrically connected to each of the plurality of battery cells included in the battery module B_k through wires to collect battery data. For example, the monitoring unit 311 may include a battery management IC (BMIC), an application-specific IC (ASIC), and the like.

The control unit 315 may control the slave BMS P_BMS_k as a whole. For example, the control unit 315 may be configured as a micro controller unit (MCU) or the like.

In an embodiment in which the slave BMS P_BMS_k includes the control unit 315, the slave BMS P_BMS_k wakes up every first cycle or second cycle. The monitoring unit 311 collects the battery data and transmits the battery data to the control unit 315. The control unit 315 may compare the battery data and the first reference value to determine whether the first fire event occurs.

In another embodiment in which the slave BMS P_BMS_k does not include the control unit 315, the monitoring unit 311 may wake up every first cycle or second cycle to collect the battery data, and determine whether the first fire event occurs by comparing the collected battery data with the first reference value.

The communication unit 313 may communicate with the master BMS R_BMS by wire or wirelessly. According to the embodiment, the communication unit 313 may transmit the battery data and the alarm message corresponding to the occurrence of the first fire event to the master BMS R_BMS. In FIGS. 1 and 2, the communication method between the communication unit 313 and the master BMS R_BMS is shown as CAN communication using a CAN BUS, but is not limited thereto, and may include a communication module that provides various types of wired communication or wireless communication methods.

The master BMS R_BMS may include a master communication unit 331, a master storage unit 333, and a master control unit 335.

The master communication unit 331 may communicate with the plurality of slave BMSs P_BMS_1, P_BMS_2,..., P_BMS_n by wire or wirelessly. For example, the master communication unit 331 may be configured as a communication bridge IC (IC) or the like.

According to the embodiment, the master communication unit 331 may wake up the master control unit 335 when receiving the alarm message from at least one slave BMS P_BMS_k. For example, the master communication unit 331 may wake up the master control unit 335 through an interrupt INTR line.

The master storage unit 333 may store at least one algorithm for predicting the occurrence of the fire in the battery 10. For example, the algorithm may be an algorithm that may be precisely predicted before a predetermined time when the thermal runaway or the like occurs. In addition, the master storage unit 333 may store the battery data received from the slave BMS P_BMS_k.

The master control unit 335 controls the battery system 1 as a whole. For example, the master control unit 335 may be configured as a micro controller unit (MCU) or the like. Upon receiving the alarm message through the master communication unit 331, the master control unit 335 may wake up and determine whether the second fire event occurs according to the predetermined algorithm.

According to an embodiment, in the sleep mode, the slave BMS P_BMS_k wakes up every predetermined cycle to determine whether the first fire event occurs by a simple method of comparing battery data and a reference value. When the first fire event occurs, the master BMS R_BMS wakes up to determine whether the second fire event occurs in a precise method according to an algorithm.

As a result of the experiment, in the embodiment in which the slave BMS P_BMS_k does not include the control unit 315, when the slave BMS P_BMS_k wakes up at the first cycle (e.g., 1 second) to predict whether the first fire event occurs, the monitoring unit 311 consumed power of 80 μA/1sec, and the communication unit 313 consumed power of 12 μA/1sec. In addition, when the slave BMS P_BMS_k wakes up at the second cycle (e.g., 32 seconds) to predict whether the first fire event occurs, the monitoring unit 311 consumed power of 12 μA/32 sec, and the communication unit 313 consumed 1 μA/32 sec of power. Compared to when the slave BMS P_BMS_k wakes up at a regular cycle, the power consumption may be further reduced when the wakeup cycle is adjusted according to the state of the battery 10.

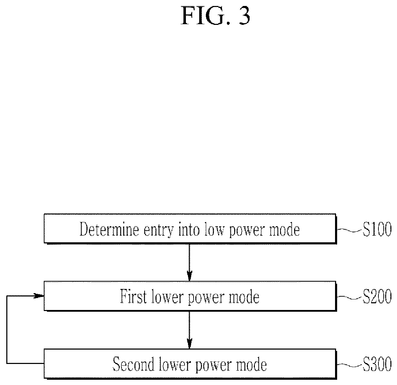

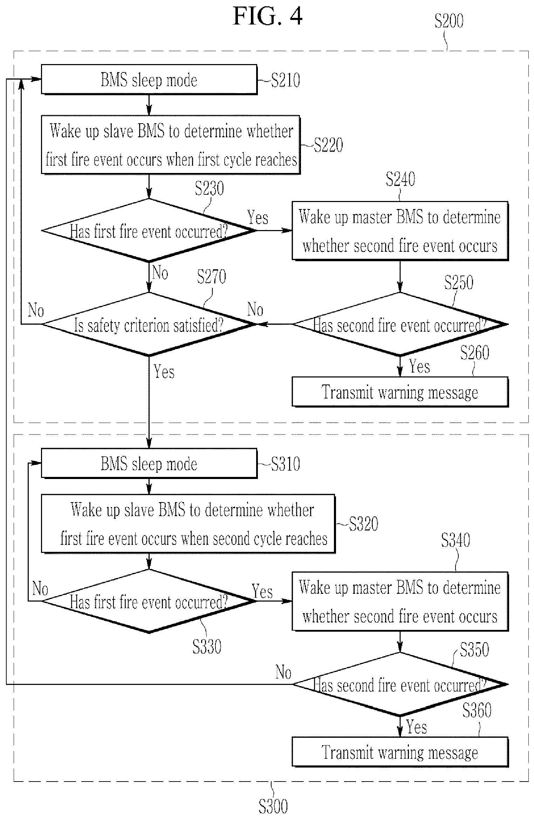

FIG. 3 is a flowchart illustrating a battery fire prediction method according to an embodiment. FIG. 4 is a flowchart illustrating in detail a first low power mode step (S200) and a second low power mode step (S300) of FIG. 3.

First, referring to FIG. 3, the master BMS R_BMS determines to enter the low power mode of the battery management system (BMS) 30 (S100).

The master BMS R_BMS may receive, from a controller (hereinafter, higher controller) of an electric vehicle, information as to whether the electric vehicle is in an operating state in which the electric vehicle is operated using the power of the battery 10, a charge state in which the electric vehicle is connected to an external charger, or a parking state in which the operation of the electric vehicle is stopped. The master BMS R_BMS may control the battery management

system (BMS) 30 in an operating mode or a low power mode based on the information transmitted from the higher controller. An electric vehicle, which is an example of a higher system, is described, but is not limited thereto, and the description below may be applied to various types of higher systems in which the battery system 1 is mounted.

(Table 1)

| Electric Vehicle \ Battery | discharge state | charge state | idle state |
|---|---|---|---|
| operating state | operating mode | – | – |
| charge state | – | low power mode | – |
| parking state | – | – | low power mode |

Table 1 is an example for describing modes executed in the battery management system (BMS) 30 according to the states of the electric vehicle and the battery 10.

For example, referring to Table 1, in an operating state in which the electric vehicle uses power of the battery 10, the battery 10 may be in a discharge state in which power is supplied to the electric vehicle. In this case, the battery management system (BMS) 30 may operate in the operating mode managing the battery system 1 according to a preset logic. The preset logic may include monitoring of the battery 10, cell balancing of the battery 10, prediction of an ignition event of the battery 10, switching control of the relay 20, and the like.

As another example, referring to Table 1, the battery management system (BMS) 30 may operate in the low power mode in the charge state in which the battery 10 of the electric vehicle is charged with power of an external charger (not illustrated) and the parking state in which the power of the battery 10 is not used, respectively.

The sleep mode may be a mode in which power is not used because the preset logic is not performed. The low power mode is a mode that predicts the occurrence of the fire event during the preset logic by waking up from the sleep mode at a predetermined cycle, and may consume predetermined power.

Specifically, in the low power mode of the battery management system (BMS) 30, the slave BMS P_BMS_k may operate in the first low power mode or the second low power mode, and the master BMS R_BMS may operate in the sleep mode.

In the first low power mode or the second low power mode, the slave BMS P_BMS_k in the sleep mode wakes up every predetermined cycle (first cycle or second cycle) to determine whether the first fire event occurs in the battery 10. The sleep mode is a mode in which the master BMS R_BMS sleeps without performing the preset logic. However, when the master BMS R_BMS in the sleep mode receives the alarm message corresponding to the occurrence of the first fire event from the slave BMS P_BMS_k, the master BMS R_BMS wakes up to determine whether the second fire event occurs.

Next, when the master BMS R_BMS determines to enter the low power mode of the battery management system (BMS) 30 (S100), the slave BMS P_BMS_k executes the first low power mode (S200).

According to an embodiment, in the charge state or the idle state of the battery 10 in which the battery 10 does not supply power to the external device, the master BMS R_BMS may transmit a first control signal instructing entry into the first low power mode to the slave BMS P_BMS_k.

The first low power mode may be a mode in which the slave BMS P_BMS_k in the sleep mode wakes up every first cycle, which is the short cycle, to determine whether the first fire event occurs in the battery 10. For example, the first cycle may be preset and stored in the slave BMS P_BMS_k. As another example, the first cycle may be transmitted from the master BMS R_BMS to the slave BMS P_BMS_k in step S100.

Referring to FIG. 4, in step S200, first, the slave BMS P_BMS_k and the master BMS R_BMS enter the sleep mode (S210).

For example, the master BMS R_BMS may enter the sleep mode by itself after transmitting the first control signal to the slave BMS P_BMS_k. In the first low power mode, the slave BMS P_BMS_k maintains the sleep mode until the first

cycle arrives. In this case, the first cycle may be determined by experiment as an optimal cycle capable of increasing the accuracy of prediction of an ignition event of the battery 10 while reducing the power consumption of the slave BMS P_BMS_k.

In step S200, when the first cycle arrives, the slave BMS P_BMS_k wakes up to determine whether the first fire event occurs (S220).

The slave BMS P_BMS_k may collect battery data after waking up. In this case, the battery data may include at least one of a cell voltage, a cell current, and a cell temperature indicating the states of each of the plurality of battery cells. In addition, the battery data may include at least one of a module voltage, which is a voltage across the battery module B, a module current, which is a current flowing through the battery module B, and a module temperature, which is a temperature of the battery module B.

According to the embodiment, the slave BMS P_BMS_k may determine whether the first fire event occurs by comparing the battery data and the first reference value.

For example, when at least two of the plurality of cell voltages corresponding to each of the plurality of battery cells exceed a first reference value (e.g., 5V), the slave BMS P_BMS_k may be determined that the first fire event occurs in the battery module B. As another example, when the temperature of the battery module B exceeds the second reference value (e.g., 30°C), the slave BMS P_BMS may determine that the first fire event occurs in the battery module B. However, it is not limited thereto, and the slave BMS P_BMS_k may determine whether the first fire event occurs in various ways by comparing the battery data and the size of the first reference value.

In step S200, when the first fire event occurs (S230, Yes), the master BMS R_BMS wakes up to determine whether the second fire event occurs (S240).

According to the embodiment, when the first fire event occurs, the slave BMS P_BMS_k may transmit the alarm message to the master BMS R_BMS. The alarm message may act as a trigger for waking up the master BMS R_BMS in the sleep mode. In addition, the slave BMS P_BMS_k may transmit the battery data along with the alarm message to the master BMS R_BMS.

The master communication unit 331 may wake up the master control unit 335 when receiving the alarm message from at least one slave BMS P_BMS_k. For example, the master communication unit 331 may wake up the master control unit 335 through the interrupt (INTR) line.

According to the embodiment, the master BMS R_BMS may determine whether the second fire event occurs according to a predetermined algorithm. A method for determining the occurrence of the first fire event may be a fire prediction method that is simple but has low predictive accuracy. The method of determining the occurrence of the second fire event may be a fire prediction method that is complicated but has high accuracy in prediction. In the low power mode according to the embodiment, the battery management system (BMS) 30 periodically determines the occurrence of the first fire event to reduce the power consumption, and determines the occurrence of the second fire event when the first fire event occurs, so it is possible to increase the accuracy of predicting the occurrence of the fire in the battery 10. In this case, the algorithm is not limited to a specific method, and may include various known methods capable of predicting the occurrence of the fire in the battery 10.

In step S200, when the second fire event occurs (S250, Yes), the master BMS R_BMS transmits a warning message to the higher controller (S260).

For example, the master BMS R_BMS may continue to transmit the warning message to the higher controller until the response message to the warning message is received from the higher controller. In this case, the warning message may include data, a basis for judgment, and the like, based on the prediction of the occurrence of the fire in the battery 10.

In operation S200, when the first fire event does not occur (S230, No) or the second fire event does not occur (S250, No), the slave BMS P_BMS_k determines the stability of the battery 10 according to the predetermined safety criteria (S270).

For example, when the first fire event does not occur (S230, No), the slave BMS P_BMS_k may determine the stability of the battery 10 according to the safety criteria. In this case, the master BMS R_BMS may continue to be in the sleep mode.

As another example, when the second fire event does not occur (S250, No), the master BMS R_BMS may transmit the second fire event determination result to the slave BMS P_BMS_k. Then, the slave BMS P_BMS_k may determine the stability of the battery 10 according to the safety criteria. However, it is not limited thereto, and the master BMS R_BMS may determine the stability of the battery 10 according to the safety criteria.

The safety criteria may include predetermined conditions for determining that the state of the battery 10 is stable. For example, the safety criteria may include a condition in which the first fire event will not occur while the wake-up cycle according to the first cycle is repeated 20 times retroactively based on the determination point in time. However, it is not limited thereto, and the safety criteria may include various conditions for determining that the state of the battery 10 is stable.

In step S200, when the stability criteria are not satisfied (S270, No), the slave BMS P_BMS_k may be repeatedly performed from step S210.

In the above, the slave BMS P_BMS_k has been described as a subject for determining whether the stability criteria are satisfied, but it is not limited thereto, and the master BMS R_BMS may also determine whether the stability criteria are satisfied.

Next, when the stability criteria are satisfied (S270, Yes), the slave BMS P_BMS_k executes the second low power mode (S300).

The second low power mode may be a mode in which the slave BMS P_BMS_k in the sleep mode wakes up every second cycle, which is the long cycle, to determine whether the first fire event of the battery 10 occurs. For example, the second cycle may be preset and stored in the slave BMS P_BMS_k. As another example, the second cycle may be transmitted from the master BMS R_BMS to the slave BMS P_BMS_k along with sleep instructions in step S100.

For example, the second cycle may be set to a predetermined multiple of the first cycle, but is not limited thereto. As a result of the experiment, when the slave BMS P_BMS_k wakes up every second and predicts whether the fire event occurs, the monitoring unit 311 consumed power of 80 μA/1 sec, and the communication unit 313 consumed power of 12 μA/1 sec. In addition, when the slave BMS P_BMS_k wakes up every 32 seconds to predict whether the fire event occurs, the monitoring unit 311 consumed power of 12 μA/32 sec and the communication unit 313 consumed power of 1 μA/32 sec (However, the power consumption may vary according to various setting values of the battery system). Compared to when the slave BMS P_BMS_k wakes up with a fixed cycle, when the slave BMS P_BMS_k wakes up with a short or long cycle according to the stable state of the battery 10, it is possible to reduce the power consumption simultaneously while ensuring the safety of battery 10.

In step S300, first, the slave BMS P_BMS_k and the master BMS R_BMS enter the sleep mode (S310).

For example, the master BMS R_BMS may command the slave BMS P_BMS_k to enter the second low power mode. Then, the slave BMS P_BMS_k maintains the sleep mode until the second cycle arrives. The master BMS R_BMS may enter the sleep mode by itself.

As another example, the slave BMS P_BMS_k may enter the sleep mode by itself after determining to enter the second low power mode. Then, the slave BMS P_BMS_k maintains the sleep mode until the second cycle arrives. The master BMS R_BMS in the sleep mode may continue to maintain the sleep mode.

In step S300, when the second cycle arrives, the slave BMS P_BMS_k wakes up to determine whether the first fire event occurs (S320).

The slave BMS P_BMS_k may collect battery data after waking up. In this case, the battery data may include at least one of a cell voltage, a cell current, and a cell temperature of each of the plurality of battery cells. In addition, the battery data may include at least one of a module voltage, which is a voltage across the battery module B, a module current, which is a current flowing through the battery module B, and a module temperature, which is a temperature of the battery module B.

According to the embodiment, the slave BMS P_BMS_k may determine whether the first fire event occurs by comparing the battery data and the first reference value. For example, when at least two of the plurality of cell voltages corresponding to each of the plurality of battery cells exceed a first reference value (e.g., 5V), the slave BMS P_BMS may be determined that the first fire event occurs. In addition, the description of step S220 described above may be equally applied to step S320.

In step S300, when the first fire event does not occur (S330, No), the slave BMS P_BMS_k may be repeatedly performed from step S310.

In step S300, when the first fire event occurs (S330, Yes), the master BMS R_BMS wakes up to determine whether the second fire event occurs (S340).

According to the embodiment, when the first fire event has occurred, the slave BMS P_BMS_k may transmit the alarm message to the master BMS R_BMS. The alarm message may act as the trigger for waking up the master BMS R_BMS in the sleep mode. In addition, the slave BMS P_BMS_k may transmit the battery data along with the alarm message to the master BMS R_BMS.

The master communication unit 331 may wake up the master control unit 335 when receiving the alarm message from at least one slave BMS P_BMS_k. For example, the master communication unit 331 may wake up the master control unit 335 through an interrupt (INTR) line.

According to the embodiment, the master BMS R_BMS may determine whether the second fire event occurs according to the predetermined algorithm. The contents described in step S240 may be equally applied to step S340.

In step S300, when the second fire event occurs (S350, Yes), the master BMS R_BMS transmits the warning message to the higher controller (S360).

For example, the master BMS R_BMS may continue to transmit the warning message to the higher controller until the response message to the warning message is received from the higher controller. In this case, the warning message may include data, a basis for judgment, and the like, based on the prediction of the occurrence of the fire in the battery 10.

In step S300, when the second fire event does not occur (S350, No), the master BMS R_BMS may control the slave BMS P_BMS_k to perform step S200.

When the second fire event does not occur, the master BMS R_BMS may transmit the second control signal

instructing entry into the first low power mode to the slave BMS P_BMS_k. Then, the master BMS R_BMS may enter the sleep mode by itself in step S210.

Even if the second fire event does not occur, since the first fire event occurs, for the stability of the battery 10, the slave BMS P_BMS_k wakes up in the first cycle, which is the short cycle, to determine whether the first fire event occurs.

## Claims

1. A battery system (1), comprising:

    a battery module (10) including a plurality of battery cells (B_1, B_2, B_3);
    a slave battery management system, BMS, (P_BMS_1, P_BMS_2, P_BMS_3); and
    a master BMS (R_BMS);
    **characterized in that**:

        the slave BMS is configured to, in a first low power mode, wake up every first cycle and determine whether a first fire event occurs in the battery module and, in a second low power mode when the battery module is determined to be in a stable state, to wake up every second cycle, which has a predetermined period longer than the first cycle, and determine whether the first fire event occurs, and
        the master BMS (R_BMS) is configured to transmit a first control signal instructing entry into the first low power mode to the slave BMS and then to enter the sleep mode, in a state where the battery module does not supply power to an external device.

2. The battery system of claim 1, wherein:
the slave BMS includes battery data including information on the state of the battery module with a predetermined reference value to determine whether the first fire event occurs.

3. The battery system of claim 1, wherein:
the slave BMS is configured to determine that the battery module is in a stable state when the first fire event does not occur during a period in which a total number of times of wake-up according to the first cycle reaches a predetermined reference number of times.

4. The battery system of claim 1, wherein:
the master BMS is configured to wake up and determine whether a second fire event occurs according to a predetermined algorithm when the first fire event occurs.

5. The battery system of claim 4, wherein:
the master BMS is configured to transmit a warning message corresponding to the occurrence of the fire in the battery module to a higher controller when the second fire event occurs.

6. The battery system of claim 4, wherein: the master BMS is configured to transmit a second control signal instructing entry into the first low power mode to the slave BMS and then to enter the sleep mode, when the second fire event does not occur.

7. A battery module fire prediction method, comprising:

    a step of entering a sleep mode by a slave battery management system, BMS, managing the battery module; and
    a step of waking up by the slave BMS to determine whether a fire event occurs in the battery module;
    **characterized by** further comprising:

        a step of transmitting by a master BMS a first control signal instructing entry into a first low power mode to the slave BMS(S100) and then entering the sleep mode(S210);
        a first low power mode step (S200) in which the slave BMS wakes up every first cycle to determine whether a first fire event occurs in the battery module; and
        a second low power mode step (S300) in which the slave BMS wakes up every second cycle, which has a predetermined period longer than the first cycle, to determine whether the first fire event occurs, when the battery module is determined to be in a stable state according to predetermined safety criterion.

**8.** The method of claim 7, wherein:

the first low power mode step,
includes a step of determining that the battery module is in a stable state when the first fire event does not occur during a period in which a total number of times of wake-up according to the first cycle reaches a predetermined reference number of times.

**9.** The method of claim 7, wherein:

the first low power mode step and the second low power mode step include
comparing, by the slave BMS, battery data including information on the state of the battery module with a predetermined reference value to determine whether the first fire event occurs.

**10.** The method of claim 9, wherein:

the first low power mode step and the second low power mode step further include
waking up, by a master battery management system (BMS) controlling the slave BMS to determine whether a second fire event occurs according to a predetermined algorithm, when the first fire event occurs.

**11.** The method of claim 10, wherein:

the first low power mode step and the second low power mode step further include
transmitting, by the master BMS, a warning message corresponding to the occurrence of the fire in the battery module to a higher controller when the second fire event occurs.

**12.** The method of claim 10, wherein:

the second low power mode step further includes
transmitting, by the master BMS, a second control signal instructing entry into the first low power mode to the slave BMS and then entering the sleep mode, when the second fire event does not occur.

## Patentansprüche

**1.** Batteriesystem (1), umfassend:

ein Batteriemodul (10), das eine Vielzahl von Batteriezellen (B_1, B_2, B_3) enthält;
ein Slave-Batteriemanagementsystem, BMS, (P_BMS_1, P_BMS_2, P_BMS_3); und
ein Master-BMS (R_BMS);
**dadurch gekennzeichnet, dass**:

das Slave-BMS konfiguriert ist, um in einem ersten Energiesparmodus jeden ersten Zyklus aufzuwachen und festzustellen, ob ein erstes Brandereignis im Batteriemodul auftritt, und in einem zweiten Energiesparmodus, wenn festgestellt wird, dass sich das Batteriemodul in einem stabilen Zustand befindet, jeden zweiten Zyklus aufzuwachen, der einen vorbestimmten Zeitraum hat, der länger als der erste Zyklus ist, und festzustellen, ob das erste Brandereignis auftritt, und
das Master-BMS (R_BMS) konfiguriert ist, um ein erstes Steuersignal zu senden, das den Eintritt in den ersten Energiesparmodus an das Slave-BMS anweist, und dann in den Schlafmodus überzugehen, in einem Zustand, in dem das Batteriemodul kein externes Gerät mit Strom versorgt.

**2.** Batteriesystem nach Anspruch 1, wobei:
das Slave-BMS Batteriedaten enthält, die Informationen über den Zustand des Batteriemoduls mit einem vorbestimmten Referenzwert enthalten, um festzustellen, ob das erste Brandereignis auftritt.

**3.** Batteriesystem nach Anspruch 1, wobei:
das Slave-BMS konfiguriert ist, um festzustellen, dass sich das Batteriemodul in einem stabilen Zustand befindet, wenn das erste Brandereignis während eines Zeitraums nicht auftritt, in dem eine Gesamtzahl der Aufwachvorgänge gemäß dem ersten Zyklus eine vorbestimmte Referenzanzahl erreicht.

4. Batteriesystem nach Anspruch 1, wobei:
das Master-BMS konfiguriert ist, um aufzuwachen und festzustellen, ob ein zweites Brandereignis gemäß einem vorbestimmten Algorithmus auftritt, wenn das erste Brandereignis auftritt.

5. Batteriesystem nach Anspruch 4, wobei:
das Master-BMS konfiguriert ist, um eine Warnmeldung, die dem Auftreten des Brandes im Batteriemodul entspricht, an eine übergeordnete Steuerung zu senden, wenn das zweite Brandereignis auftritt.

6. Batteriesystem nach Anspruch 4, wobei:
das Master-BMS konfiguriert ist, um ein zweites Steuersignal zu senden, das den Eintritt in den ersten Energiesparmodus an das Slave-BMS anweist, und dann in den Schlafmodus überzugehen, wenn das zweite Brandereignis nicht auftritt.

7. Brandvorhersageverfahren für ein Batteriemodul, umfassend:

einen Schritt des Eintretens in einen Schlafmodus durch ein Slave-Batteriemanagementsystem, BMS, das das Batteriemodul verwaltet; und
einen Schritt des Aufwachens durch das Slave-BMS, um festzustellen, ob ein Brandereignis im Batteriemodul auftritt;
**dadurch gekennzeichnet, dass** es ferner umfasst:

einen Schritt des Sendens eines ersten Steuersignals, das den Eintritt in einen ersten Energiesparmodus an das Slave-BMS (S100) anweist, durch ein Master-BMS und dann des Eintretens in den Schlafmodus (S210);
einen ersten Energiesparmodus-Schritt (S200), in dem das Slave-BMS jeden ersten Zyklus aufwacht, um festzustellen, ob ein erstes Brandereignis im Batteriemodul auftritt; und
einen zweiten Energiesparmodus-Schritt (S300), in dem das Slave-BMS jeden zweiten Zyklus aufwacht, der einen vorbestimmten Zeitraum hat, der länger als der erste Zyklus ist, um festzustellen, ob das erste Brandereignis auftritt, wenn festgestellt wird, dass sich das Batteriemodul gemäß einem vorbestimmten Sicherheitskriterium in einem stabilen Zustand befindet.

8. Verfahren nach Anspruch 7, wobei:

der erste Energiesparmodus-Schritt
einen Schritt des Feststellens umfasst, dass sich das Batteriemodul in einem stabilen Zustand befindet, wenn das erste Brandereignis während eines Zeitraums nicht auftritt, in dem eine Gesamtzahl der Aufwachvorgänge gemäß dem ersten Zyklus eine vorbestimmte Referenzanzahl erreicht.

9. Verfahren nach Anspruch 7, wobei:

der erste Energiesparmodus-Schritt und der zweite Energiesparmodus-Schritt
das Vergleichen von Batteriedaten, die Informationen über den Zustand des Batteriemoduls enthalten, mit einem vorbestimmten Referenzwert durch das Slave-BMS enthalten, um festzustellen, ob das erste Brandereignis auftritt.

10. Verfahren nach Anspruch 9, wobei:
der erste Energiesparmodus-Schritt und der zweite Energiesparmodus-Schritt ferner das Aufwachen durch ein Master-Batteriemanagementsystem (BMS), das das Slave-BMS steuert, enthalten, um festzustellen, ob ein zweites Brandereignis gemäß einem vorbestimmten Algorithmus auftritt, wenn das erste Brandereignis auftritt.

11. Verfahren nach Anspruch 10, wobei:

der erste Energiesparmodus-Schritt und der zweite Energiesparmodus-Schritt ferner
das Senden einer Warnmeldung durch das Master-BMS, die dem Auftreten des Brandes im Batteriemodul entspricht, an eine übergeordnete Steuerung enthalten, wenn das zweite Brandereignis auftritt.

12. Verfahren nach Anspruch 10, wobei:

der zweite Energiesparmodus-Schritt ferner

das Senden eines zweiten Steuersignals, das den Eintritt in den ersten Energiesparmodus an das Slave-BMS anweist, durch das Master-BMS und dann das Eintreten in den Schlafmodus enthält, wenn das zweite Brandereignis nicht auftritt.

## Revendications

**1.** Système de batterie (1), comprenant :

un module de batterie (10) incluant une pluralité de cellules de batterie (B_1, B_2, B_3) ;
un système de gestion de batterie esclave, BMS, (P_BMS_1, P_BMS_2, P_BMS_3) ; et
un BMS maître (R_BMS) ;
**caractérisé en ce que** :

le BMS esclave est configuré pour, dans un premier mode basse consommation, se réveiller à chaque premier cycle et déterminer si un premier événement d'incendie se produit dans le module de batterie et, dans un second mode basse consommation lorsqu'il est déterminé que le module de batterie est dans un état stable, se réveiller à chaque second cycle, qui a une période prédéterminée plus longue que le premier cycle, et déterminer si le premier événement d'incendie se produit, et
le BMS maître (R_BMS) est configuré pour transmettre un premier signal de commande instruisant l'entrée dans le premier mode basse consommation au BMS esclave, puis pour entrer dans le mode veille, dans un état où le module de batterie n'alimente pas un dispositif externe.

**2.** Le système de batterie selon la revendication 1, dans lequel :
le BMS esclave inclut des données de batterie incluant des informations sur l'état du module de batterie avec une valeur de référence prédéterminée pour déterminer si le premier événement d'incendie se produit.

**3.** Le système de batterie selon la revendication 1, dans lequel :
le BMS esclave est configuré pour déterminer que le module de batterie est dans un état stable lorsque le premier événement d'incendie ne se produit pas pendant une période au cours de laquelle un nombre total de fois de réveil selon le premier cycle atteint un nombre de fois de référence prédéterminé.

**4.** Le système de batterie selon la revendication 1, dans lequel :
le BMS maître est configuré pour se réveiller et déterminer si un second événement d'incendie se produit selon un algorithme prédéterminé lorsque le premier événement d'incendie se produit.

**5.** Le système de batterie selon la revendication 4, dans lequel :
le BMS maître est configuré pour transmettre un message d'avertissement correspondant à l'occurrence de l'incendie dans le module de batterie à un contrôleur de niveau supérieur lorsque le second événement d'incendie se produit.

**6.** Le système de batterie selon la revendication 4, dans lequel :
le BMS maître est configuré pour transmettre un second signal de commande instruisant l'entrée dans le premier mode basse consommation au BMS esclave, puis pour entrer dans le mode veille, lorsque le second événement d'incendie ne se produit pas.

**7.** Procédé de prédiction d'incendie de module de batterie, comprenant :

une étape d'entrée en mode veille par un système de gestion de batterie esclave, BMS, gérant le module de batterie ; et
une étape de réveil par le BMS esclave pour déterminer si un événement d'incendie se produit dans le module de batterie ;
**caractérisé en ce qu'**il comprend en outre :

une étape de transmission par un BMS maître d'un premier signal de commande instruisant l'entrée dans un premier mode basse consommation au BMS esclave (S100) puis d'entrée en mode veille (S210) ;
une première étape de mode basse consommation (S200) dans laquelle le BMS esclave se réveille à chaque premier cycle pour déterminer si un premier événement d'incendie se produit dans le module de batterie ; et
une seconde étape de mode basse consommation (S300) dans laquelle le BMS esclave se réveille à chaque

second cycle, qui a une période prédéterminée plus longue que le premier cycle, pour déterminer si le premier événement d'incendie se produit, lorsqu'il est déterminé que le module de batterie est dans un état stable selon un critère de sécurité prédéterminé.

**8.** Le procédé selon la revendication 7, dans lequel :

la première étape de mode basse consommation,
inclut une étape de détermination que le module de batterie est dans un état stable lorsque le premier événement d'incendie ne se produit pas pendant une période au cours de laquelle un nombre total de fois de réveil selon le premier cycle atteint un nombre de fois de référence prédéterminé.

**9.** Le procédé selon la revendication 7, dans lequel :

la première étape de mode basse consommation et la seconde étape de mode basse consommation incluent
la comparaison, par le BMS esclave, de données de batterie incluant des informations sur l'état du module de batterie avec une valeur de référence prédéterminée pour déterminer si le premier événement d'incendie se produit.

**10.** Le procédé selon la revendication 9, dans lequel :

la première étape de mode basse consommation et la seconde étape de mode basse consommation incluent en outre
le réveil, par un système de gestion de batterie maître (BMS) contrôlant le BMS esclave, pour déterminer si un second événement d'incendie se produit selon un algorithme prédéterminé, lorsque le premier événement d'incendie se produit.

**11.** Le procédé selon la revendication 10, dans lequel :

la première étape de mode basse consommation et la seconde étape de mode basse consommation incluent en outre
la transmission, par le BMS maître, d'un message d'avertissement correspondant à l'occurrence de l'incendie dans le module de batterie à un contrôleur de niveau supérieur lorsque le second événement d'incendie se produit.

**12.** Le procédé selon la revendication 10, dans lequel :

la seconde étape de mode basse consommation inclut en outre
la transmission, par le BMS maître, d'un second signal de commande instruisant l'entrée dans le premier mode basse consommation au BMS esclave, puis l'entrée dans le mode veille, lorsque le second événement d'incendie ne se produit pas.

1
Relay
OUT1
20
P_BMS_1
CAN BUS
B_1
Slave
BMS
30
10
P_BMS_2
R_BMS
B_2
Slave
BMS
Master
BMS
External
device
P_BMS_n
B_n
Slave
BMS
OUT2

FIG. 2

CAN BUS
P_BMS_k
R_BMS
311
315
331
335
B_k
Monitoring unit
Control unit
Communication unit
313
Master communication unit
Master Control unit
333
Master storage unit

FIG. 3

Determine entry into low power mode
S100
First lower power mode
S200
Second lower power mode
S300

FIG. 4

S200
BMS sleep mode
S210
Wake up slave BMS to determine whether first fire event occurs when first cycle reaches
S220
S230
S240
Has first fire event occurred?
Yes
Wake up master BMS to determine whether second fire event occurs
No
S270
S250
No
No
Is safety criterion satisfied?
Has second fire event occurred?
S260
Yes
Yes
Transmit warning message
BMS sleep mode
S310
Wake up slave BMS to determine whether first fire event occurs when second cycle reaches
S320
S340
No
Has first fire event occurred?
Yes
Wake up master BMS to determine whether second fire event occurs
S330
S350
No
Has second fire event occurred?
S360
Yes
Transmit warning message
S300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20190006724 A1